# EUROPÄISCHE PATENTSCHRIFT

(11) **EP 1 872 023 B1**
(45) Veröffentlichungstag und Bekanntmachung des Hinweises auf die Patenterteilung: **03.03.2010**
(21) Anmeldenummer: 06722820.5
(22) Anmeldetag: 20.04.2006
(51) Int. Cl.: F16C 11/06

(54) **KUGELGELENK**
BALL-AND-SOCKET JOINT
JOINT A ROTULE

(30) Priorität: 21.04.2005 DE 102005018663
(43) Veröffentlichungstag der Anmeldung: 02.01.2008
(73) Patentinhaber: ZF Friedrichshafen AG, 88038 Friedrichshafen (DE)
(72) Erfinder: RECHTIEN, Martin, 49434 Neuenkirchen-Vörden (DE); NOE, Helmut, 48477 Hörstel (DE); ZEIDLER, Marc, 49401 Damme (DE)
(86) Internationale Anmeldenummer: PCT/DE2006/000702
(87) Internationale Veröffentlichungsnummer: WO 2006/111155

(56) Entgegenhaltungen:
- GB-A- 1 097 492
- GB-A- 1 285 794
- US-A- 2 047 885
- US-A- 2 891 826
- US-A- 3 248 776
- US-A- 3 413 023
- US-A- 3 856 423

## Beschreibung

Die Erfindung betrifft ein Kugelgelenk, beispielsweise für ein Achssystem oder eine Radaufhängung eines Kraftfahrzeuges, nach dem Oberbegriff des Patentanspruchs 1.

Kugelgelenke der eingangs genannten Art kommen beispielsweise, jedoch keineswegs ausschließlich, im Bereich der Radaufhängung, oder auch als Hülsengelenk, beispielsweise zur Anlenkung von Querstabilisatoren bei Kraftfahrzeugen zum Einsatz.

Die an derartige Kugelgelenke gestellten Anforderungen umfassen insbesondere hohe spezifische Belastbarkeit und geringes Lagerspiel sowohl im statischen als auch im dynamischen Belastungsfall, ferner geringen Wartungsbedarf bzw. Wartungsfreiheit möglichst über die Lebensdauer des Kraftfahrzeugs, eine möglichst geringe Masse und einen geringen Bauraumbedarf. Darüber hinaus soll die Herstellung nach Möglichkeit kostengünstig erfolgen.

Üblicherweise besitzt ein Kugelgelenk ein im Wesentlichen ringförmiges oder topfförmiges Gelenkgehäuse, in dessen Innenraum die Lagerschale bzw. Kugelschale des Kugelgelenks angeordnet ist. Bei aus dem Stand der Technik bekannten Kugelgelenken entspricht dabei die mit der Oberfläche der Kugel des Kugelgelenks in Kontakt stehende Lageroberfläche der Kugelschale, zumindest im Idealfall, im Wesentlichen der Form der Gelenkkugel. Mit anderen Worten stimmt die Lageroberfläche der Kugelschale mit der Form eines Kugelabschnitts überein.

Aufgrund von Toleranzen in der Fertigung der Kugelschale sowie aufgrund von Kräften bei der Montage des Kugelgelenks, die insbesondere beim Einpressen der Kugelschale in das Gelenkgehäuse auftreten, stimmt jedoch die Form der Lageroberfläche der Lagerschale am fertig montierten Kugelgelenk zumeist nicht mehr mit der beabsichtigten Kugelform bzw. mit der Form der Kugel des Kugelzapfens überein. Vielmehr entspricht die Form der Kugelschale dann oftmals in etwa einem Rotationsellipsoid, dessen größere Halbachse mit der Längsachse des Kugelzapfens bzw. der Kugelhülse zusammenfällt. Dies bedeutet mit anderen Worten, dass der Kontakt zwischen Kugel und Kugelschale häufig nicht, wie eigentlich wünschenswert, vollflächig, sondern vielmehr lediglich im mittleren Bereich der Kugelschale in Form einer Linienberührung bzw. Streifenberührung erfolgt.

Außerdem besitzt die Kugelschale der meisten Kugelgelenke in dem genannten mittleren Bereich - also im ungefähren Bereich ihres größten Durchmessers bezogen auf einen Längsschnitt durch das Kugelgelenk - eine aus geometrischen Gründen besonders geringe Wandstärke. Dies ergibt zusätzlich zu den beschriebenen Formabweichungen eine besonders hohe Federkonstante bzw. besonders geringe Elastizität der Kugelschale in diesem mittleren Abschnitt.

Beides führt im Ergebnis dazu, dass die Flächenpressung zwischen Kugel und Kugelschale bei den aus dem Stand der Technik bekannten Kugelgelenken dem Ideal der gleichmäßigen Lastverteilung auf der gesamten zur Verfügung stehenden Lageroberfläche zumeist nicht entspricht. Vielmehr konzentriert sich ein Großteil der Last auf den erwähnten! mittleren Abschnitt der Kugelschale im Bereich ihres größten Durchmessers, bezogen auf den Längsschnitt durch das Kugelgelenk. Dies führt zu ungleichmäßigem, erhöhtem Lagerverschleiß, vorzeitig vergrößertem Lagerspiel, geringerer Tragfähigkeit und einer reduzierten Lebensdauer bei den bekannten Kugelgelenken.

Die US 2,047,885 zeigt darüber hinaus ein Kugelgelenk mit einem ring- oder topfförmigen Gelenkgehäuse in dessen Innenraum eine Kugelschale angeordnet ist. Innerhalb der Kugelschale ist eine Kugel einer Kugelhülse gleitbeweglich aufgenommen, wobei zwischen der Kugelschale und der Kugel ein Spalt für die Aufnahme einer Ölschicht angeordnete ist. Der Radius der Kugelschale ist vom Mittel punkt des Radius der Kugel verschoben ist, wobei diese Differenz der Dicke der Ölschicht entspricht. Der Radius der Kugelschale ist konstant über die gesamte Lagerkurve der Kugelschale.

Mit diesem Hintergrund ist es Aufgabe der vorliegenden Erfindung, ein Kugelgelenk zu schaffen, mit dem die genannten Nachteile des Standes der Technik überwunden werden. Insbesondere soll dabei die Verteilung der Flächenpressung zwischen Kugel und Kugelschale einen möglichst ebenen, gleichmäßigen Verlauf erhalten, die spezifische Belastbarkeit und Tragfähigkeit des Kugelgelenks soll verbessert, das Gelenkspiel soll verringert werden, und es soll eine erhöhte Lebensdauer erzielt werden.

Diese Aufgabe wird durch ein Kugelgelenk mit den Merkmalen des Patentanspruchs 1 gelöst. Bevorzugte Ausführungsformen sind Gegenstand der Unteransprüche.

Das erfindungsgemäße Kugelgelenk umfasst zunächst einmal in an sich bekannter Weise ein im Wesentlichen ring- oder topfförmiges Gelenkgehäuse. Das Gelenkgehäuse weist einen im Wesentlichen zylinderförmigen Innenraum auf, in dem die Kugelschale des Kugelgelenks angeordnet ist. In der Kugelschale ist die Kugel des Kugelzapfens bzw. der Kugelhülse des Kugelgelenks gleitbeweglich aufgenommen.

Erfindungsgemäß zeichnet sich das Kugelgelenk jedoch dadurch aus, dass die Lageroberfläche der Kugelschale im Wesentlichen mit der Oberfläche eines Rotationsellipsoids übereinstimmt. Die kleinere Halbachse des Rotationsellipsoids fällt dabei mit der Axialrichtung des Kugelgelenks, sprich mit der Längsachse des Kugelzapfens bzw. mit der Längsachse der Kugelhülse, zusammen.

Die rotationsellipsoidische Gestalt der Lageroberfläche der Kugelschale führt am montierten Kugelgelenk dazu, dass der Kontakt zwischen Kugeloberfläche und Kugelschale, im Unterschied zum Stand der Technik, deutlich flächiger und mit einer gleichmäßigeren Flächenpressungsverteilung erfolgt. Denn aufgrund der im Wesentlichen mit einem Rotationsellipsoid übereinstimmenden Form der Lageroberfläche werden die eingangs beschriebenen Verformungseffekte und Toleranzen, die im Stand der Technik häufig lediglich zu einer Linien- bzw. Streifenberührung zwischen Kugel und Kugelschale führen, gegenkompensiert. Außerdem wird unterschiedlich großen Elastizitäten der Kugelschale entgegengewirkt, die aufgrund der unterschiedlichen Wandstärken der Kugelschale in den verschiedenen Bereichen der Kugelschale auftreten.

Dabei sollen die Begriffe "Rotationsellipsoid" bzw. "rotationsellipsoidisch" selbstverständlich nicht im streng mathematischen Sinne ausgelegt werden. Vielmehr soll damit erfindungsgemäß eine Kugelschale beansprucht werden, die im Längsschnitt durch das Kugelgelenk einen nicht konstanten Krümmungsradius aufweist dergestalt, dass der Krümmungsradius im mittleren Bereich der Kugelschale geringfügig kleiner ist als in den axialen Randbereichen der Kugelschale.

Vorzugsweise stimmt dabei die größere Halbachse der rotationsellipsoidisch geformten Kugelschale mit dem Radius der Kugel des Kugelgelenks überein. Dies bedeutet mit anderen Worten, dass sich die Lageroberflächen von Kugelschale und Gelenkkugel in den axialen Randbereichen der Kugelschale, sprich im Bereich der Stirnseiten des Gelenkgehäuses, geometrisch überschneiden bzw. im mathematischen Sinne gegenseitig durchdringen. Da eine tatsächliche gegenseitige Durchdringung der Lagerflächen am montierten Kugelgelenk nicht möglich ist, führt dies im Ergebnis zu einer gewissen definierten Vorspannung zwischen Kugelschale und Gelenkkugel. Aufgrund der erfindungsgemäßen Formgebung der Kugelschale konzentriert sich die Durchdringung der Lagerflächen bzw. die definierte Vorspannung speziell auf die axialen Randbereiche der Kugelschale, und nimmt mit zunehmender Nähe zum mittleren Bereich der Kugelschale immer weiter ab.

Auf diese Weise ergibt sich im Zusammenbau des Kugelgelenks eine spielfreie, vollflächige Anlage zwischen Kugelschale und Gelenkkugel, bei der im Belastungsfall zudem eine gleichmäßige Verteilung der Flächenpressung über die gesamten Kontaktflächen zwischen Kugelschale und Gelenkkugel ermöglicht wird. Damit erhöht sich aber auch die spezifische Belastbarkeit und Tragfähigkeit des Kugelgelenks, bei gleicher Dimensionierung lässt sich die Lebensdauer erhöhen, und das Kugelgelenk bleibt aufgrund der gleichmäßigeren Beanspruchung der Lageroberflächen erheblich länger im gewünschten spielfreien Zustand.

Für die Verwirklichung der Erfindung ist es zunächst unerheblich, auf welche Weise die Kugelschale die erfindungsgemäße, ellipsoidisch geformte Lageroberfläche erhält. So ist es beispielsweise denkbar, dass eine zunächst mit kugelförmiger Lageroberfläche hergestellte Kugelschale nachträglich, beispielsweise auch beim Vorgang des Einpressens in das Lagergehäuse, plastisch oder elastisch verformt wird, um auf diese Weise die vorgesehene rotationsellipsoidische Lageroberfläche zu erhalten. Gemäß einer bevorzugten Ausführungsform der Erfindung weist die Kugelschale jedoch bereits produktions- bzw. werkzeugseitig die ellipsoidisch geformte Lageroberfläche auf. Mit anderen Worten bedeutet dies, dass die gewünschte ellipsoidische Formgebung der Kugelschale bereits bei der Urformung der Kugelschale erzeugt wird. Auf diese Weise lässt sich das gewünschte Maß an geometrischer Überdeckung zwischen Gelenkkugel und Kugelschale besonders präzise und reproduzierbar einstellen.

Nach einer weiteren Ausführungsform der Erfindung ist die Oberfläche der Kugelschale am Außenumfang der Kugelschale zumindest geringfügig konkav ausgebildet. Dies führt - ähnlich wie zuvor bezüglich Gelenkkugel und Kugelschale beschrieben - auch zwischen Kugelschale und Gelenkgehäuse zu einer bereichsweisen geometrischen Überdeckung, in diesem Fall zwischen der Außenoberfläche der Kugelschale und der Innenoberfläche des Gelenkgehäuses. Auf diese Weise lässt sich zusätzlich auch der Kontakt zwischen Kugelschale und Gelenkgehäuse verbessern und die Verteilung der Flächenpressung zwischen der Außenoberfläche der Kugelschale und der Innenoberfläche des Gelenkgehäuses ebenfalls gleichmäßiger und damit tragfähiger gestalten.

Gemäß einer weiteren Ausführungsform der Erfindung weist die Kugelschale, bezogen auf das Kugelgelenk in Axialrichtung, einen Schlitz auf. Dies bedeutet mit anderen Worten, dass die Kugelschale nicht mehr einen geschlossenen Ring darstellt, sondern herstellungsseitig in Form eines "C" (mit sehr geringer Schlitzbreite) vorliegt. Dies ist vorteilhaft insofern, als sich hierdurch die Montage des Kugelgelenks vereinfacht. Zudem kann der Schlitz in der Kugelschale zur Aufnahme von Wärmeausdehnungen im Betrieb des Kugelgelenks herangezogen werden, was bei dem erfindungsgemäßen Kugelgelenk von besonderer Bedeutung ist, da aufgrund der ellipsoidischen Formgebung der Kugelschale eine besonders innige und spielfreie Anlage der Kugelschale an Gelenkkugel und Gelenkgehäuse, im Wesentlichen ohne Möglichkeit der Aufnahme von Wärmeausdehnungen, gegeben ist.

Die Kugelschale ist gemäß einer besonders bevorzugten Ausführungsform der Erfindung aus einem spritzgießbaren Thermoplastmaterial hergestellt, insbesondere aus Polyoxymethylen. Polyoxymethylen weist einen sehr niedrigen Reibwiderstand bei gleichzeitig guter Abriebfestigkeit und hohem elastischem Federvermögen auf. Zudem besitzt Polyoxymethylen eine hohe Chemikalienbeständigkeit, was wegen der Anwesenheit von Schmiermitteln und anderen Betriebsstoffen am Kraftfahrzeug von Bedeutung ist.

Die Art der Befestigung bzw. Verankerung der Kugelschale im Gelenkgehäuse ist zur Verwirklichung der Erfindung zunächst unerheblich. Gemäß einer bevorzugten Ausführungsform der Erfindung ist die Kugelschale jedoch im Gelenkgehäuse in Axialrichtung beidseitig formschlüssig abgestützt. Besonders bevorzugt umfasst dabei die formschlüssige axiale Abstützung zumindest 80% der Stirnfläche der Kugelschale. Auf diese Weise wird die stets in einem gewissen Maße elastische bzw. zum plastischen Kriechen neigende Kugelschale besonders effektiv gestützt, und rundum fast vollständig eingeschlossen.

Im Folgenden wird die Erfindung anhand lediglich Ausführungsbeispiele darstellender Zeichnungen näher erläutert. Dabei zeigt:
- **Fig. 1**: in schematischer Darstellung ein Kugelgelenk gemäß dem Stand der Technik im Längsschnitt;
- **Fig. 2**: in schematischer Darstellung ein Rotationsellipsoid;
- **Fig. 3**: in schematischer Darstellung eine Ausführungsform eines Hülsengelenks gemäß der vorliegenden Erfindung im halben Längsschnitt;
- **Fig. 4**: in schematischer Darstellung ein weiteres Rotationsellipsoid;
- **Fig. 5**: in schematischer, vergrößerter Darstellung Kugelschale und Umriss der Gelenkkugel eines Hülsengelenks gemäß **Fig. 3****;**
- **Fig. 6**: in schematischer Darstellung Vergleich der Flächenpressungsverteilungen zwischen einem Kugelgelenk gemäß dem Stand der Technik und einem erfindungsgemäßen Kugelgelenk;
- **Fig. 7**: in schematischer isometrischer Darstellung die Kugelschale einer Ausführungsform eines erfindungsgemäßen Kugelgelenks nach der Urformung;
- **Fig. 8**: in einer **Fig. 7** entsprechenden Darstellung die Kugelschale gemäß **Fig. 7** im Einbauzustand; und
- **Fig. 9**: Kugelschale eines Kugelgelenks gemäß dem Stand der Technik.

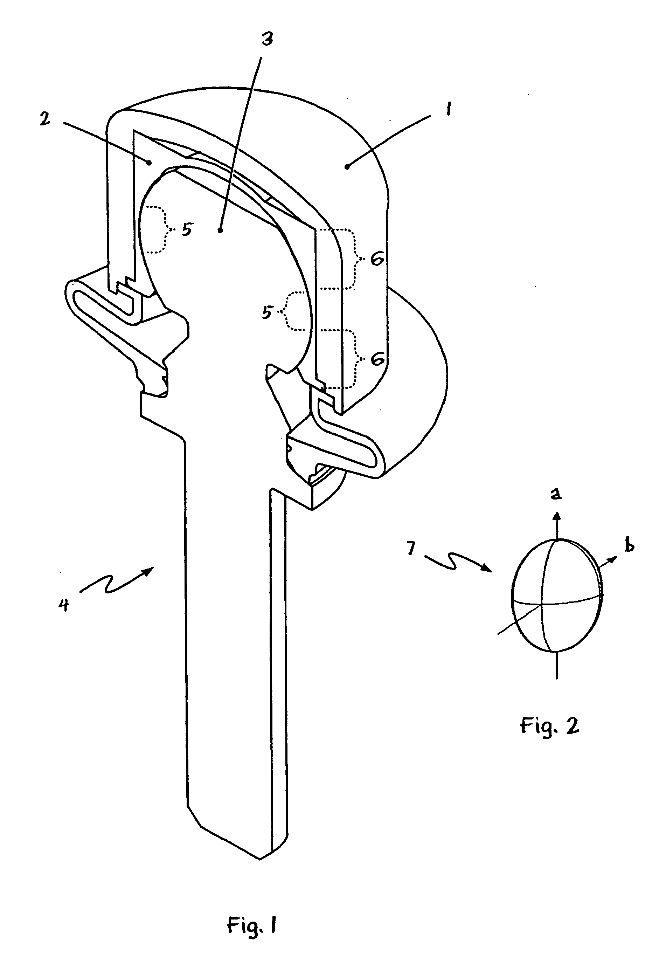

**Fig. 1** zeigt in schematischer Längsschnittdarstellung ein Kugelgelenk gemäß dem Stand der Technik. Man erkennt das im Wesentlichen topfförmige Gelenkgehäuse 1 mit der darin angeordneten Lagerschale bzw. Kugelschale 2. Im Innenraum der Kugelschale 2 wiederum ist die Kugel 3 eines Kugelzapfens 4 angeordnet.

Deutlich ist zu erkennen, dass die Wandstärke der Kugelschale 2 in deren mittlerem Bereich 5 - bezogen auf die Axialrichtung des Kugelzapfens 4 - besonders gering ist, während die Wandstärke zu den stirnseitigen Endbereichen 6 der Kugelschale 2 hin stark zunimmt und dort schließlich ein Mehrfaches der Wandstärke im mittleren Bereich 5 der Kugelschale 2 ausmacht.

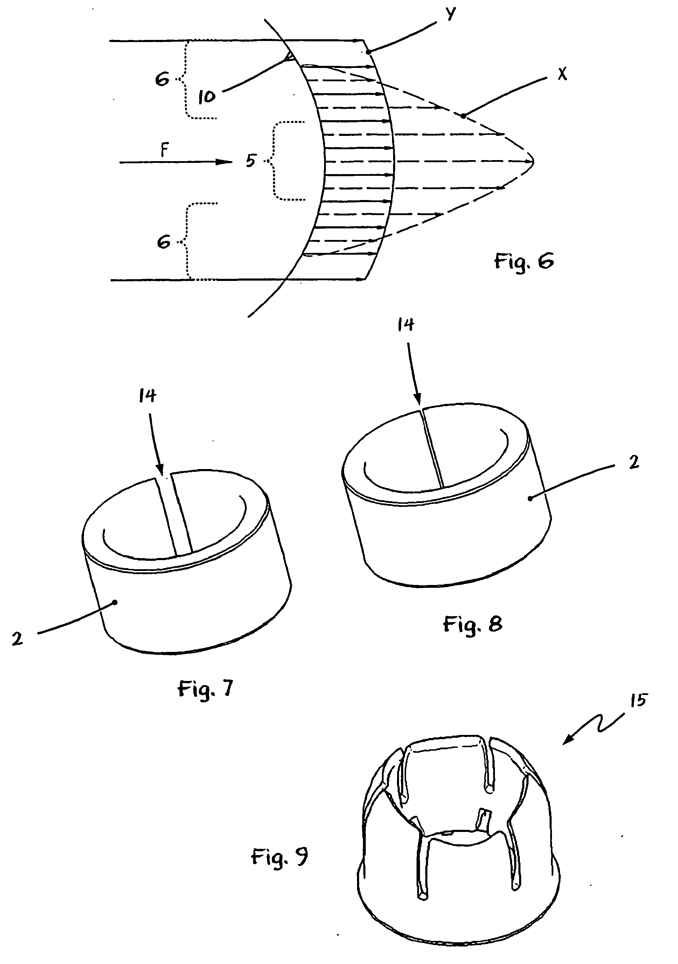

Dies führt jedoch dazu, wie bereits eingangs beschrieben, dass die Kugelschale 2 in ihrem mittleren Bereich 5 eine mehrfach höhere Federkonstante bzw. eine viel geringere Nachgiebigkeit als in den axial endnahen Bereichen 6 aufweist. Aufgrund dieser ungleichmäßigen Nachgiebigkeiten stellt sich jedoch unvermeidlich, sobald das Kugelgelenk belastet wird, eine ungleichmäßige Flächenpressungsverteilung ein, selbst für den hypothetischen Fall, dass die Lageroberfläche der Kugelschale 2 die ideale Kugelform aufweisen würde. Eine derartige ungleichmäßige Flächenpressungsverteilung ist, aufgetragen über die Oberfläche 10 der Lagerschale 2, beispielhaft in **Fig. 6** dargestellt, wobei die mit X bezeichnete Kurve die Flächenpressungsverteilung des Kugelgelenks aus dem Stand der Technik gemäß **Fig. 1** widerspiegelt.

Die stark auf den mittleren Abschnitt 5 der Kugelschale 2 konzentrierte Flächenpressungsverteilung X ergibt sich selbst für den hypothetischen Fall der idealen Kugelgestalt der Lageroberfläche daraus, dass die randnahen Bereiche 6 der Kugelschale 2, aufgrund ihrer größeren Nachgiebigkeit bei Belastung, im Vergleich zum mittleren Bereich 5 ohne wesentliche Kraftaufnahme stärker nachgeben, weswegen der mittlere Bereich 5 der Kugelschale 2 aufgrund seiner viel geringeren Nachgiebigkeit zwangsläufig den größten Traganteil aufnehmen muss.

Es kommt hinzu, dass die Kugelschale 2 bei der Montage im Gelenkgehäuse 1 zumeist auch noch elastisch verformt wird dergestalt, dass die Lageroberfläche der Kugelschale 2, ausgehend von ihrer ursprünglichen Kugelgestalt, nach dem Einbau eine im Wesentlichen hochellipsoidisch geformte Oberfläche aufweist, siehe zum Vergleich die schematische Darstellung eines Rotationsellipsoids 7 mit den Hauptachsen *a*, *b* in **Fig. 2****.**

Dabei fällt die größere Hauptachse *a* des durch die Lageroberfläche der Kugelschale 2 gebildeten Ellipsoids 7 mit der Längsachse des Kugelzapfens 3 zusammen. Dies bedeutet jedoch, dass auch bereits im lastneutralen Zustand des Kugelgelenks keine Flächenberührung zwischen Gelenkkugel 3 und der leicht hochellipsoidisch verformten Kugelschale 2 mehr erfolgt. Vielmehr wird die eigentlich wünschenswerte Flächenberührung aufgrund der Verformung der Kugelschale 2 im Wesentlichen in eine Linienberührung im mittleren Bereich 5 der Kugelschale 2, also im Bereich Ihrer geringsten Wandstärke, verwandelt.

All dies führt im Ergebnis zu einem schlechten Tragbild zwischen Gelenkkugel 3 und Kugelschale 2, mit den entsprechenden nachteiligen Folgen bezüglich Lebensdauer, Abnutzung, Spielfreiheit und Belastbarkeit des Kugelgelenks.

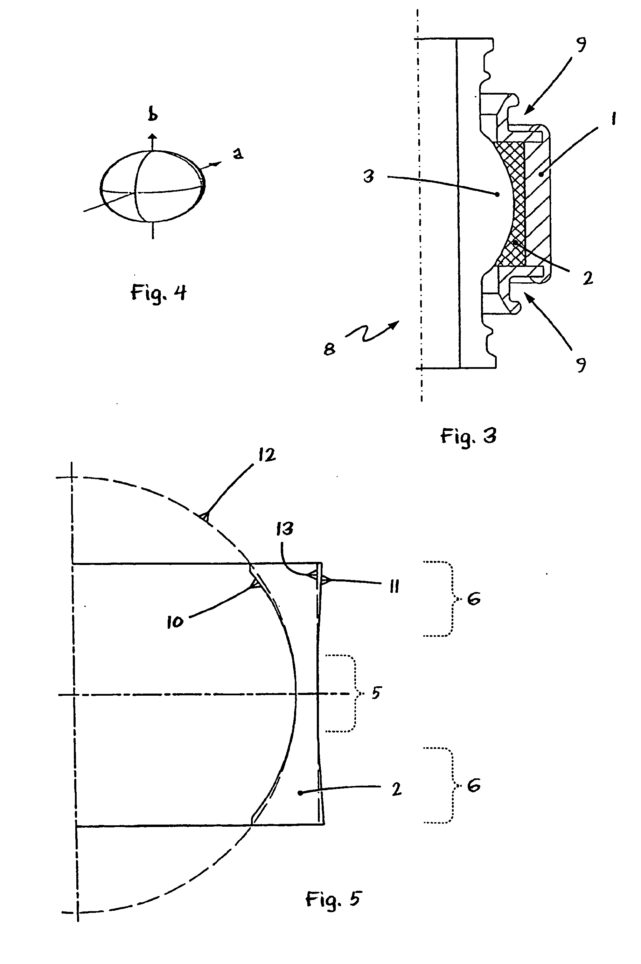

**Fig. 3** zeigt eine Ausführungsform eines hier als Hülsengelenk ausgebildeten Kugelgelenks gemäß der vorliegenden Erfindung. Man erkennt zunächst ein ring- bzw. zylinderförmiges Gelenkgehäuse 1 mit einer im Inneren des Gelenkgehäuses 1 angeordneten Kugelschale 2. Im Innenraum der Kugelschale 2 ist hier die Gelenkkugel 3 einer Kugelhülse 8 angeordnet. Die Kugelschale 2 ist dabei durch die im Bereich der Stirnseiten des Gelenkgehäuses 1 bzw. der Kugelschale 2 angeordneten Verschlussringe 9 - zusammen mit der flächigen Anlage an Gelenkgehäuse 1 und Gelenkkugel 3 - fast vollständig eingeschlossen. Auf diese Weise wird jegliches Kriechen des Werkstoffs der Kugelschale 2 weitestgehend vermieden, was ebenfalls der Lebensdauer und Spielfreiheit des Kugelgelenks zugute kommt.

Die Form der Kugelschale geht aus der beispielhaften, schematischen Darstellung eines Querellipsoids gemäß **Fig. 4****,** bzw. aus der vergrößerten Darstellung der Kugelschale 2 gemäß **Fig. 5** hervor. Man erkennt in **Fig. 5****,** dass die Kugelschale 2 bei der dargestellten Ausführungsform sowohl im Bereich der innenliegenden Lageroberfläche 10 als auch im Bereich Ihrer im Wesentlichen zylinderförmigen Außenoberfläche 11 ein in Richtung auf ihre axialen Stirnseiten hin zunehmendes Übermaß gegenüber der Oberfläche 12 der Gelenkkugel 3 bzw. gegenüber der zylindrischen Außenform 13 aufweist. Dies bedeutet mit anderen Worten, dass die Lageroberfläche 10 der Kugelschale 2 gemäß **Fig. 3** und 5 nicht mehr wie beim Stand der Technik kugelförmig (bzw. faktisch oft hochellipsoidisch ist, vgl. **Fig. 1** und **2**), sondern vielmehr im Wesentlichen die Gestalt eines Querellipsoids aufweist. Dabei fällt jedoch in diesem Fall die kürzere Hauptachse *b* des Rotationsellipsoids mit der Längsachse des Kugelgelenks bzw. der Kugelhülse zusammen, vgl. die schematische Darstellung des Querellipsoids gemäß **Fig. 4****.**

Zusammen mit der geringfügig konkav ausgebildeten Außenkontur 11 der Kugelschale 2 führt die rotationsellipsoidische Formgebung der Lageroberfläche 10 der Kugelschale 2 dazu, dass dem weiter oben beschriebenen Effekt der Lastkonzentration im mittleren Bereich 5 der Kugelschale 2 entgegengewirkt wird, indem die randnäheren Bereiche 6 der Kugelschale 2 ein definiertes Maß an radialer Vorspannung erhalten. Im zusammengebauten Zustand des Kugelgelenks ergibt sich somit eine'vollflächige Berührung zwischen Kugelschale 2 und Gelenkkugel 3, was zusammen mit der genannten radialen Vorspannung zu einer Vergleichmäßigung der Flächenpressungsverteilung zwischen Gelenkkugel 3 und Kugelschale 2 führt.

Beispielhaft ist dies in **Fig. 4** in Gestalt der Kurve Y dargestellt. Anhand des Vergleichs mit der dem Stand der Technik entsprechenden Kurve X wird deutlich erkennbar, dass die Last F gleichmäßig auf der gesamten zur Verfügung stehenden Oberfläche der Kugelschale 2 verteilt wird. Dies führt zu der beschriebenen höheren Tragfähigkeit, verbesserten Belastbarkeit und längeren Lebensdauer des Kugelgelenks, bei gleichzeitig dauerhaft minimalem Lagerspiel.

**Fig. 7** und **8** zeigen die Kugelschale 2 einer Ausführungsform eines erfindungsgemäßen Kugelgelenks bzw. Hülsengelenks, wobei die Kugelschale 2 in **Fig. 7** im Zustand unmittelbar nach der Urformung, beispielsweise im Fall einer Kugelschale aus thermoplastischem Material nach dem Spritzguss, dargestellt ist. **Fig. 8** zeigt dieselbe Kugelschale 2 im Einbauzustand. Die Kugelschale gemäß **Fig. 7** und **8** ist mittels des Schlitzes 14 in axialer Längsrichtung geteilt, was zunächst einmal die Montage des Kugelgelenks erleichtert. Gelenkgehäuse 1, Kugelschale 2 und Breite des Schlitzes 14 können dabei so dimensioniert werden, dass der Schlitz 14 der Kugelschale 2 im montierten Zustand des Kugelgelenks nicht vollständig geschlossen ist. Die verbleibende, geringe Öffnungsbreite des Schlitzes 14 im montierten Zustand des Kugelgelenks steht in diesem Fall zur Aufnahme von Wärmeausdehnungen des Materials der Kugelschale 2 zur Verfügung, um auf diese Weise mechanischen Verspannungen und damit verbundener Schwergängigkeit des Kugelgelenks vorzubeugen

Da vorliegend jedoch nur ein einziger und im Zusammenbau zudem äußerst schmaler Schlitz 14 vorhanden ist, wird die tragende Oberfläche der Kugelschale 2 durch den Schlitz 14 nur in unerheblichem Maß verkleinert, so dass die maximale Tragfähigkeit des Kugelgelenks praktisch uneingeschränkt gegeben ist.

Auch in dieser Hinsicht unterscheidet sich die vorliegend betrachtete Ausführungsform des erfindungsgemäßen Kugelgelenks mit der Kugelschale gemäß **Fig. 7** und **8** vom Stand der Technik. Denn im Stand der Technik werden üblicherweise Kugelschalen 15 mit mehreren breiten Schlitzen verwendet, wie beispielhaft in Fig. 9 dargestellt. Derartige Kugelschalen 15 lassen sich zwar ebenfalls einfach montieren. Durch die zahlreichen breiten Schlitze solcher Kugelschalen 15 wird jedoch zum einen der Anteil der tragenden Fläche der Kugelschale 15 nicht unerheblich verringert. Zum anderen kann das Material der Kugelschale 15 bei Belastung in den wegen der Schlitze freiliegenden Raum kriechen, wodurch sich die Wandstärke der Kugelschale 15 verringert und womit im Ergebnis erhebliches, unerwünschtes Lagerspiel entstehen kann.

Der Einsatz von geschlitzten Kugelschalen 2 gemäß **Fig. 7** und **8** ermöglicht somit im Vergleich zum Stand der Technik ebenfalls die Erhöhung der Zuverlässigkeit, Tragfähigkeit und Lebensdauer von Kugelgelenken.

Im Ergebnis wird deutlich, dass dank der Erfindung ein Kugelgelenk geschaffen wird, das gegenüber den aus dem Stand der Technik bekannten Kugelgelenken Vorteile insbesondere in Bezug auf Lebensdauer, Ausfallsicherheit und Belastbarkeit aufweist. Die gleichmäßigere Flächenpressungsverteilung im Lagerspalt zwischen Kugelschale und Gelenkkugel gewährleistet einen besonders geringen Verschleiß und niedrige Reibmomente. Damit leistet die Erfindung einen Beitrag zur Verbesserung der Zuverlässigkeit und Wartungsfreiheit von Kugelgelenken, insbesondere in Bezug auf die Anwendung im Bereich der Achssysteme und Radaufhängungen am Kraftfahrzeug.

### Bezugszeichenliste

- 1: Gelenkgehäuse
- 2: Kugelschale
- 3: Gelenkkugel
- 4: Kugelzapfen
- 5: Mittlerer Bereich der Kugelschale
- 6: Randnaher Bereich der Kugelschale
- 7: Hochellipsoid
- 8: Kugelhülse
- 9: Verschlussring
- 10: Lageroberfläche
- 11: Konkave Außenkontur
- 12: Kugeloberfläche
- 13: Zylindrische Außenkontur
- 14: Schlitz
- 15: Kugelschale

## Patentansprüche

1. Kugelgelenk, beispielsweise für ein Achssystem eines Kraftfahrzeugs, mit einem im Wesentlichen ring- oder topfförmigen Gelenkgehäuse (1), in dessen im Wesentlichen zylinderförmigem Innenraum eine Kugelschale (2) angeordnet ist, wobei in der Kugelschale (2) die Kugel (3) eines Kugelzapfens (4) oder einer Kugelhülse (8) gleitbeweglich aufgenommen ist,
**dadurch gekennzeichnet,**
**dass** die Lageroberfläche (10) der Kugelschale (2) im nicht montierten Zustand im Wesentlichen mit der Oberfläche eines Rotationsellipsoids übereinstimmt, dessen kleinere Halbachse (b) mit der Axialrichtung des Kugelgelenks zusammenfällt.

2. Kugelgelenk nach Anspruch 1,
**dadurch gekennzeichnet,**
**dass** die größere Halbachse (a) der Kugelschale mit der Länge des Radius der Gelenkkugel übereinstimmt.

3. Kugelgelenk nach Anspruch 1 oder 2,
**dadurch gekennzeichnet,**
**dass** die Kugelschale (2) bereits werkzeugseitig die ellipsoidisch geformte Lageroberfläche (10) aufweist.

4. Kugelgelenk nach einem der Ansprüche 1 bis 3,
**dadurch gekennzeichnet,**
**dass** die Oberfläche (11) der Kugelschale (2) am Außenumfang der Kugelschale (2) konkav ausgebildet ist.

5. Kugelgelenk nach einem der Ansprüche 1 bis 4,
**dadurch gekennzeichnet,**
**dass** die Kugelschale (2) in Axialrichtung einen Schlitz (14) aufweist.

6. Kugelgelenk nach einem der Ansprüche 1 bis 5,
**dadurch gekennzeichnet,**
**dass** die Kugelschale (2) aus einem spritzgießbaren Thermoplastmaterial, insbesondere aus Polyoxymethylen besteht.

7. Kugelgelenk nach einem der Ansprüche 1 bis 6,
**dadurch gekennzeichnet,**
**dass** die Kugelschale (2) im Gelenkgehäuse (1) in Axialrichtung beidseitig formschlüssig abgestützt ist.

8. Kugelgelenk nach Anspruch 7,
**dadurch gekennzeichnet,**
**dass** die formschlüssige axiale Abstützung jeweils zumindest 80% der Stirnfläche der Kugelschale (2) umfasst.

## Claims

1. Ball and socket joint, for example for an axle system of a motor vehicle, comprising a substantially annular or pot-shaped joint housing (1), in the substantially cylindrical interior of which a ball socket (2) is disposed, wherein in the ball socket (2) the ball (3) of a ball pin (4) or of a ball sleeve (8) is slidingly received,
**characterized in**
**that** the bearing surface (10) of the ball socket (2) in the non-assembled state corresponds substantially to the surface of an ellipsoid of revolution, the smaller semiaxis (b) of which coincides with the axial direction of the ball and socket joint.

2. Ball and socket joint according to claim 1,
**characterized in**
**that** the larger semiaxis (a) of the ball socket corresponds to the length of the radius of the joint ball.

3. Ball and socket joint according to claim 1 or 2,
**characterized in**
**that** the ball socket (2) already in tooling terms has the ellipsoidally shaped bearing surface (10).

4. Ball and socket joint according to one of claims 1 to 3,
**characterized in**
**that** the surface (11) of the ball socket (2) at the outer circumference of the ball socket (2) is of a concave design.

5. Ball and socket joint according to one of claims 1 to 4,
**characterized in**
**that** the ball socket (2) in axial direction has a slot (14).

6. Ball and socket joint according to one of claims 1 to 5,
**characterized in**
**that** the ball socket (2) is made from an injection-mouldable thermoplastic material, in particular from polyoxymethylene.

7. Ball and socket joint according to one of claims 1 to 6,
**characterized in**
**that** in the joint housing (1) the ball socket (2) is positively supported in axial direction at both ends.

8. Ball and socket joint according to claim 7,
**characterized in**
**that** the positive axial support comprises in each case 80% of the end face of the ball socket (2).

## Revendications

1. Joint à rotule, notamment pour un système d'essieu d'un véhicule automobile, comprenant un boîtier d'articulation (1) sensiblement en forme d'anneau ou de pot, dans l'espace interne sensiblement cylindrique duquel est aménagé un coussinet sphérique (2), lequel coussinet sphérique (2) reçoit à coulissement la rotule (3) d'un pivot à rotule (4) ou d'une douille à rotule (8), **caractérisé en ce que**
la surface de palier (10) du coussinet sphérique (2) correspond à l'état non monté sensiblement à la surface d'un ellipsoïde de révolution, dont le plus petit demi-axe (b) coïncide avec la direction axiale du joint à rotule.

2. Joint à rotule selon la revendication 1,
**caractérisé en ce que**
le plus grand demi-axe (a) du coussinet sphérique correspond à la longueur du rayon de la rotule.

3. Joint à rotule selon la revendication 1 ou 2,
**caractérisé en ce que**,
le coussinet sphérique (2) présente déjà, côté outil, la surface de palier (10) conformée en ellipsoïde.

4. Joint à rotule selon l'une quelconque des revendications 1 à 3,
**caractérisé en ce que**
la surface (11) du coussinet sphérique (2) se présente sous une forme concave sur la circonférence externe du coussinet sphérique (2).

5. Joint à rotule selon l'une quelconque des revendications 1 à 4,
**caractérisé en ce que**
le coussinet sphérique (2) présente une fente (14) dans la direction axiale.

6. Joint à rotule selon l'une quelconque des revendications 1 à 5,
**caractérisé en ce que**
le coussinet sphérique (2) est constitué d'un matériau thermoplastique moulable par injection, en particulier de polyoxyméthylène.

7. Joint à rotule selon l'une quelconque des revendications 1 à 6,
**caractérisé en ce que**
le coussinet sphérique (2) est soutenu dans la direction axiale, de part et d'autre, par adaptation de formes dans le boîtier d'articulation (1).

8. Joint à rotule selon la revendication 7,
**caractérisé en ce que**
le soutien axial par adaptation de formes comprend respectivement au moins 80 % de la surface frontale du coussinet sphérique (2).
